Europäisches Patentamt

(19) European Patent Office

Office européen des brevets

(11) Publication number: **0 456 595 A2**

## (12) EUROPEAN PATENT APPLICATION

(21) Application number: **91600004.5**

(22) Date of filing: **28.02.91**

(51) Int. Cl.⁵: **G01C 21/20**

The references to the drawing are deemed to be deleted (Rule 43 EPC).

In accordance with the last part of Article 14 (2) EPC the applicant has filed a text with which it is intended to bring the translation into conformity with the original text of the application.

(30) Priority: **10.04.90 GR 90010277**

(43) Date of publication of application:
**13.11.91 Bulletin 91/46**

(84) Designated Contracting States:
**DE FR GB IT NL**

(71) Applicant: **Anagnostopoulos, Panagiotis A.**
**P. Ralli 19**
**GR-177 78 Athens (GR)**

(72) Inventor: **Anagnostopoulos, Panagiotis A.**
**P. Ralli 19**
**GR-177 78 Athens (GR)**

(54) **Method for guiding vehicle drivers to a predetermined target.**

(57)    The invention refers to a method for guiding vehicle drivers to a pre-determined target, which is materialised by a Data Processing Unit installed inside the vehicle and connected to reading Data Unit, input and output peripherals and the odometre of the vehicle and is characterised by the fact that the determination of the position of the vehicle, at any instance, is achieved by the indication of the odometre and by data input by the driver.

EP 0 456 595 A2

The invention refers to method for guiding vehicle drivers to predetermined target which is materialised by a means of data processing placed inside the vehicle, which means is connected to input and output units and is characterised by the fact that the determination of the position of the vehicle at any instant is achieved by means of data input by the user in the data processing unit during the travel of the vehicle and by the travelled distance received by the indication of the odometre.

STATE-OF-THE-ART

For the state-of-the-art, the following patents are known:
4,939,662 Nimura et al.
4,758,959 Thoone et al.
4,564,905 Masuda et al.
4,539,641 Kawashimo et al.
4,371,934 Wahl et al.
4,546,439 Gene Esparza
4,858,133 Takenchi et al.
4,926,336 Yamada
4,926,331 Windle et al.
4,757,455 Tsunoda et al.
4,878,170 Zeevi
4,914,605 Loughmiller, Jr. et al.
4,819,174 Furuno et al.
4,814,989 Dobereiner et al.
4,943,925 Moroto et al.
4,907,159 Mauge et al.
4,903,211 Audo
4,937,752 Nanba et al.
4,937,751 Nimura et al.
4,937,572 Yamada et al.

The known methods of guiding vehicle drivers may be divided in two major groups:

(a) The autonomous guiding methods which do not require any external data (i.e. from infrastructure disposed along the road network) for the determination of the position of the vehicle at any instant. The position of the vehicle is calculated by means of integration of the travelled distance of the vehicle which is measured by means of one or more distance measuring systems (odometres) and taking into account the turning angle of the vehicle at any instance which in turn is measured by means of a system for measuring absolute or relative turning angle (i.e. gyroscopic or magnetic compass) or by means of a system for measuring the steering angle or finally the turning angle is found indirectly by means of comparing the indications of two or more odometres which measure the travelled distance of two or more wheels.

(b) The dependent methods for vehicle drivers guidance in which the determination of the position of the vehicle at any instance requires external data, which is provided by an infrastructure disposed along a road network which normally consists of transmitters connected with a central data processing unit or of the transmitters which operate independently.

Other infrastructure may be composed out of receivers for the reception of messages by the vehicles, processing of those messages by a central data processing unit, and system of transmitters for guiding the drivers. Other infrastructure is composed out of transmitters, the signal of each corresponding to a position datum.

The main disadvantages of those methods are the following:

For the autonomous methods

(A) High installation cost of the system in the vehicle
(B) Reduced precision for the determination of the position of the vehicle, primarily due to inability of the measuring wheels to follow every ground irregularities at any speed and acceleration of the vehicle.

For the dependent methods

(C) It is required the installation of an infrastructure for the determination of the position of the vehicle. The method cannot operate in areas not covered by the infrastructure.
(D) It is required an additional communication unit between the infrastructure and the unit which results to additional installation and operational cost.

THE PRESENT INVENTION offers a simple method for the determination of the position of the vehicle which is equally efficient with the existing uiding methods but without their complexity.

The method is based only on the indication of the odometre for the measurement of the travelled distance by the vehicle. Any other information about the motion of the vehicle as turning angle at a specific point, accidental deviation of the vehicle etc. are input by the user in the data processing unit.

The advantages of the present invention are:

(A) It has low cost because apart from the connection with the odometre, which is a prerequisite of the embodiment of the method, any other means of embodiment does not depend on the operation of the vehicle.
(B) It is exact because for the determination of the position of the vehicle at any instant, it requires the participation of the user who may input the data processing unit much more data than any infrastructure or additional sensing devices.
(C) It is an autonomous method and it does not require any infrastructure.

(D) It does not require additional communication means.

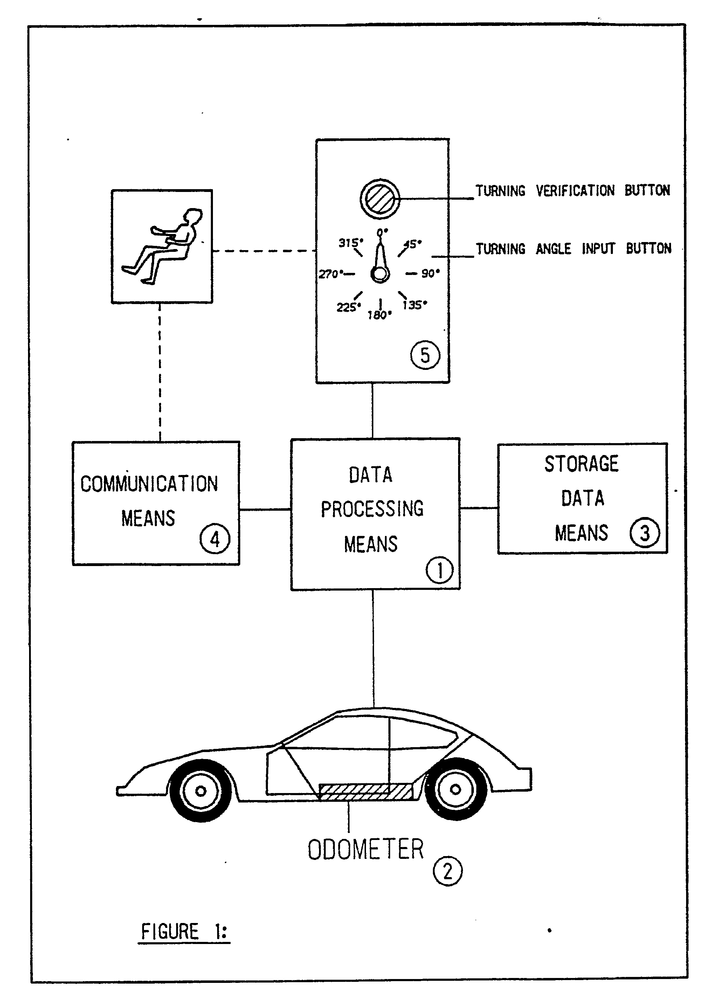

An embodiment of the invention is described below (Fig. 1):

Inside the vehicle, a portable data processing means is installed (1), which is connected to the odometre (2) of the vehicle in such a way that the distance travelled by the vehicle to be input as a continuous data in the storage means of the data processing unit. The data processing unit is also connected with the disc driving unit (3) for reading data about the road network of a major area and also connected with a communication-with-the-driver unit composed out of loudspeakers for signals presented vocally and screen for signals transmitted optically. In a simplified version, the communication unit is consisted of a simple LED screen. In the disk driving unit, a diskette is placed which contains data for the road network of a major area in which the vehicle is to be moved.

The main data stored in this diskette is the codes of the crossroads of the traffic network and the travelled length of the roads connecting any two crossroads. Any other data like traffic regulating signals, traffic light position etc may be stored into this diskette. Using the road network data and only the indication of the odometre for the travelled distance, the data processing unit may determine the exact position of the vehicle at any instance, provided that the initial departure point and initial direction has been input.

The initial data, that is departure point in the road network, and initial direction are inserted by the user. For the travelling of the vehicle, with no turns, the data processing unit, from the departure point data, and the indication of the odometre is able to calculate the distance from the departure travelled by the vehicle and from the road network data may determine the exact position of the vehicle.

However, if the routing of the vehicle requires a turn at some node, the data processing unit may only calculate the point at which the turn needs to be made, but it is unable to verify if the turn has been actually made.

This verification is given by the user. The data for the verification of the turn may consist of a signal input to the data processing unit along with the activation of the respective directional blinkers.

That way, if the user activates the blinkers, close to a position where a turn is expected, the data processing unit assumes that the expected turn has been done and consequently from the road network data may conclude the new direction of the vehicle, along with the data of the turning point. Again, from the turning point and the new direction, the Data Processing Unit may calculate the position of the vehicle at any instance from only the indication of the odometre, until the next required turn etc.

Any deviations of the vehicle in portions of the road network between two crossroads or in general in areas where no turn is expected, but where the user must activate the blinkers, the Data Processing Unit does not assume it as verification of an execution of a turn.

Road segments between two nodes (crossroads) are characterised only by their travelled length. Consequently, the Data Processing Unit treats them as straight line segments even if in reality they consist of curvilinear segments.

At every node of the road network, the measured travelled distance is set equal to zero and the data processing unit reads the required distance to be travelled to the next node (crossroad). Out of this required distance, the current indication of the odometre is subtracted in such a way that upon arrival to the next node the result of the subtraction to be zero. If the result of the subtraction is not zero, the user upon pressing a button may initialise the data for the location of the vehicle correcting, that way, any accumulating error in the position determining procedure.

The same button may be used, instead of the blinker's activation, for the verification of a turning execution. In nodes of the road network of multiple road connection of various directions, the user informs the data processing unit for the exact turning angle, for the determination of the new direction of the vehicle and consequently for the new position determination of the vehicle at any instance.

## Claims

1. Method for vehicle drivers guiding to a predetermined target, materialised by a portable Data Processing Unit installed inside the vehicle (1) connected to the odometre (2) of the vehicle and to input (5) and output (4) peripherals and to a disk driving unit (3) for reading data concerning the road network of a major area in which the vehicle will travel and is characterised by the fact that the determination of the position of the vehicle at every instance is achieved by means of data input by the user to the Data Processing unit during the travel and by integration of the travelled distance of the vehicle measured by the odometre.

2. Method for vehicle drivers guiding to a predetermined target as in CLAIM 1, where the Data Processing Unit may determine the current position of the vehicle by (a) input data of departure point and initial direction, (b) by travelled distance from departure point measured by odometre, (c) by road network information and (d) by data inserted by user.

3. Method for vehicle drivers guiding to a predetermined target as in CLAIM 1, where when a turn is required the user inserts as input the verification of the execution of the turn, in such a way that the Data Processing Unit from the road network data to conclude the new direction of the vehicle.

4. Method for vehicle drivers guiding to a predetermined target as in CLAIM 1, where the main data of the road network consists of the crossroad number and the travelled length of the portions of the roads between any two crossroads.

5. Input turning verification data as in CLAIM 3 where the user enters the exact turning angle of the vehicle.

6. Method of vehicle drivers guiding to a predetermined target as in CLAIM 1, where the verification of the execution of an expected turn, as in CLAIM 3, is given by circuit connected to the blinker switch, in such a way that turning on of the blinkers close to a point of expectation of a turn to result to its verification, while turning on of the blinkers away from the point of turning expectation is ignored.

7. Method of vehicle drivers guiding to a predetermined target as in CLAIM 1, where the user verifies the execution of a turn as in CLAIM 3, where the verification of execution of a turn and the exact turning angle is given by pressing a special button and inserting a special code for the turning angle.

8. Method of vehicle drivers guiding to a predetermined target as in CLAIM 1, where the road segments between two crossroads are characterised by only their travelled length (assumed by the processing unit as straight line segments even if in reality they are curvilinear ones) where the position of the vehicle between two nodes is presented to the user as the result of the subtraction of the total distance between the two neighbouring crossroads minus the odometre indication been initialised at the previous departure node.

9. Method of vehicle drivers guiding to a predetermined target as in CLAIM 1, where the position of the vehicle between any two crossroads is presented as the difference of the total distance to be travelled as in claim 8, where the indication upon arrival to a crossroad is not zero and the user may initiate, upon pressing a button, the indication eliminating any accumulation error in the measurement of the distance travelled.

TURNING VERIFICATION BUTTON

TURNING ANGLE INPUT BUTTON

FIGURE 1: